# EUROPÄISCHE PATENTSCHRIFT

(11) **EP 2 228 546 B1**
(45) Veröffentlichungstag und Bekanntmachung des Hinweises auf die Patenterteilung: **11.06.2014**
(21) Anmeldenummer: 10001699.7
(22) Anmeldetag: 19.02.2010
(51) Int. Cl.: F16B 5/02, B62D 29/04

(54) **Anordnung eines Bauteils an einem Träger.**
Arrangement of a component on a support
Agencement d'un composant sur un élément de support

(30) Priorität: 03.03.2009 DE 102009011546
(43) Veröffentlichungstag der Anmeldung: 15.09.2010
(73) Patentinhaber: Bayerische Motoren Werke Aktiengesellschaft, 80809 München (DE)
(72) Erfinder: Effner, Torben, 84169 Altfraunhofen (DE); Mayer, Martin, 80335 München (DE); Niedermaier, Konrad, 84137 Vilsbiburg (DE); Schlegel, Simone, 85375 Neufahrn b. Freising (DE)

(56) Entgegenhaltungen:
- EP-A1- 1 072 502
- EP-A1- 1 854 706
- DE-A1- 10 010 580
- DE-A1-102006 028 591
- DE-A1-102008 025 602
- DE-T2- 60 210 573
- DE-T2- 69 809 481
- DE-T2- 69 903 875
- FR-A1- 2 747 091

## Beschreibung

Die Erfindung betrifft eine Anordnung eines Bauteils an einem Träger.

Bei der Befestigung von Karosserieteilen an einem Fahrzeug werden diese an bestimmten vorgegebenen Positionen fixiert. Beispielsweise wird ein Kotflügel an bestimmten Montagepunkten mit dem Fahrzeug verschraubt.

Sind die Karosserieteile an dem Fahrzeug angebracht, wird z.B. im Rahmen einer kathodischen Tauchlackierung (KTL) ein Korrosionsschutz in einem on-line Verfahren mit Trocknungstemperaturen von bis zu ca. 200°C aufgebracht. Bei einem sog. in-line Verfahren wird das Bauteil im Anschluss an den KTL-Trockner an das Fahrzeug montiert. Hierbei herrschen Lacktrocknungstemperaturen von bis zu ca. 140°C.

Zunehmend werden als Karosserieteile auch Kunststoffe eingesetzt, die einen gegenüber Stahl oder Aluminium deutlich größeren Wärmeausdehnungskoeffizienten aufweisen. Bei einer Erwärmung in einem Lacktrockner dehnt sich ein Karosserieteil aus Kunststoff entsprechend stärker aus. Eine starre Befestigung der Kunststoffteile führt dazu, dass sich diese irreversibel verformen, z.B. ausbeulen, was im Hinblick auf eine ästhetische Formgebung des Fahrzeugs inakzeptabel ist.

Eine derartige Ausdehnung findet - wenn auch in reduziertem Umfang - auch im üblichen Einsatz eines Kraftfahrzeugs statt. So können in entsprechenden Gegenden zu bestimmten Jahreszeiten Karosserieteile Temperaturen bis zu ca. 85°C erreichen, wohingegen in einer winterlichen Umgebung auch Temperaturen von weniger als -35°C ohne sichtbare Verformung der Karosserieteile möglich sein müssen.

Aus der DE 10 2006 028 591 A1 ist bereits eine Anordnung eines Bauteils an einem Träger bekannt, wobei das Bauteil eine Längsnut aufweist, in die ein Gleitelement gleitend eingreift, das an dem Träger befestigt ist.

In diesem Zusammenhang offenbart auch DE 699 03 875 T2 eine Befestigungsvorrichtung ("Gleitbefestigungsvorrichtung"), die eine Gleitbewegung des Karosserieteils in Bezug auf ein Strukturteil des Kraftfahrzeugs ermöglicht.

Um ein Klappern des Karosserieteils zu vermeiden und um eine möglichst geringe Fugen- und Straktoleranz zu gewährleisten, wird vorzugsweise ein enger Spalt zwischen dem Gleitelement und dem Karosserieteil gewählt. Beispielsweise liegen Spaltmaße in einem Bereich von 0,2mm bis 0,4mm.

Hierbei ist es von Nachteil, dass aufgrund derartiger Spaltmasse und aufgrund der Kapillarwirkung einer Flüssigkeit (Beschichtungsmedien, KTL, Füller, Basislack, Decklack) z.B. bei der Lacktrocknung die in dem Spalt befindliche Flüssigkeit trocknet und die Gleiteigenschaften des Gleitelements behindert. Wenn die Bewegung des Gleitelements bei starken Temperaturschwankungen nicht gewährleistet ist, kommt es zu bleibenden plastischen Verformungen. Dies führt dazu, dass das Karosserieteil aussortiert werden muss bzw. dass ein bereits montiertes Karosserieteil erneut montiert bzw. das Fahrzeug erneut in einen vorhergehenden Montageabschnitt eingeschleust werden muss. Entsprechend sind die mit einem derartigen Fehler verbundenen Kosten verhältnismäßig hoch.

Die Aufgabe der Erfindung besteht darin, die vorstehend genannten Nachteile zu vermeiden und insbesondere eine Möglichkeit zu schaffen, die effizient und kostengünstig eine derartige Behinderung der Bewegung des Gleitelements verhindert.

Diese Aufgabe wird gemäß den Merkmalen des unabhängigen Patentanspruchs gelöst. Weiterbildungen der Erfindung ergeben sich auch aus den abhängigen Ansprüchen.

Zur Lösung der Aufgabe wird ein Bauteil vorgeschlagen aufweisend
- eine Längsnut,
- ein Gleitelement zum gleitenden Eingriff in die Längsnut,
- wobei zumindest teilweise in einem Überlappungsbereich zwischen dem Bauteil und dem Gleitelement mindestens ein Kanal zum Ablauf von Flüssigkeiten vorgesehen ist.

Bevorzugt ist die Längsnut als eine längliche Aussparung in dem Bauteil, insbesondere als ein Gleitelementdurchbruch, ausgeführt.

Anhand des mindestens einen Kanals kann eine Flüssigkeit, z.B. nach der kathodischen Tauchlackierung, abfließen und somit wird ein Verkleben des Gleitelements in einer nachfolgenden Trocknung verhindert. Das Gleitelement bleibt in der Längsnut beweglich bzw. können Temperaturschwankungen durch die gleitende Bewegung des Gleitelements in der Längsnut kompensiert werden.

Dabei ist der Kanal als eine Rille, insbesondere als eine Längsrille oder als eine Querrille zumindest teilweise entlang oder zu der Längsnut, ausgeführt.

Insbesondere können mehrere Kanäle z.B. in Form von Längsoder Querrillen vorgesehen sein, so dass bei unterschiedlicher Positionierung des Bauteils ein Abfließen der Flüssigkeit möglich ist.

Eine Oberfläche des Bauteils und/oder des Gleitelements ist zumindest teilweise beschichtet.

Anhand einer mittels der Beschichtung erreichten verminderten Benetzbarkeit kann ein Abfluss von Flüssigkeiten über den mindestens einen Kanal verbessert werden.

Eine Weiterbildung ist es, dass der mindestens eine Kanal in dem Bauteil und/oder in dem Gleitelement vorgesehen ist.

Auch ist es eine Weiterbildung, dass der mindestens eine Kanal schräg oder im wesentlichen orthogonal zu der Richtung der Längsnut ausgeführt ist.

Es ist eine Ausgestaltung, dass das Bauteil einen von beispielsweise einem Strukturteil eines Kraftfahrzeugs deutlich unterschiedlichen thermischen (Längen-)Ausdehnungskoeffizienten aufweist.

Ferner ist es eine Weiterbildung, dass das Bauteil mindestens einen der folgenden Werkstoffe aufweist:
- einen Kunststoff, insbesondere einen faserverstärkten Kunststoff, insbesondere einen kohlefaserverstärkten Kunststoff;
- ein Leichtmetall, insbesondere auf der Basis Aluminium, Magnesium, Titan und/oder deren Legierungen;
- Stahl.

Im Rahmen einer zusätzlichen Weiterbildung ist das Gleitelement aus Metall. Alternativ kann das Gleitelement aus Kunststoff sein. Auch kann das Gleitelement Metall und Kunststoff umfassen.

Eine nächste Weiterbildung besteht darin, dass das Bauteil ein (insbesondere flächiges) Karosserieteil oder ein Interieurteil eines Fahrzeugs ist.

Eine Ausgestaltung ist es, dass das Bauteil eines der folgenden Teile umfasst:
- einen Kotflügel,
- einen Stoßfänger,
- ein Schweller,
- eine Heckklappe oder mindestens ein Teil der Heckklappe,
- eine Türe oder mindestens ein Teil der Türe,
- eine Frontklappe oder mindestens ein Teil der Frontklappe,
- einen Spoiler,
- ein Dach,
- ein Interieur-Teil.

Insbesondere können unterschiedliche Bauteile im Inneren, z.B. als Interieur-Teile, und/oder außerhalb, z.B. an der oder als Karosserie des Kraftfahrzeugs befestigt werden oder sein.

Beispielsweise können Teile eines Kraftfahrzeugs betroffen sein, bei denen im Verlauf des Kraftfahrzeuglebens eine Ausdehnungsbewegung gegenüber der Karosserie des Kraftfahrzeugs gegeben sein sollte.

Eine Ausgestaltung ist es, dass das Bauteil mit einem Träger lösbar verbunden wird. Insbesondere kann der Träger ein Chassis eines Fahrzeugs sein.

Ausführungsbeispiele der Erfindung werden nachfolgend anhand der Zeichnungen dargestellt und erläutert.

Es zeigen:
- Fig.1: eine isometrische Darstellung umfassend ein Bauteil, z.B. ein Karosserieteil eines Fahrzeugs, mit einer Längsnut, wobei in die Längsnut ein Gleitelement gleitend eingreift, wobei das Bauteil eine Vielzahl von Kanälen zum Abfluss von Flüssigkeiten aufweist;
- Fig.2A: eine Schnittdarstellung, bei der zwischen dem Gleitelement und dem Bauteil in einem Überlappungsbereich ein Kanal mittels einer Phase an dem Bauteil realisiert ist;
- Fig.2B: eine Schnittdarstellung, bei der zwischen dem Gleitelement und dem Bauteil in einem Überlappungsbereich ein Kanal mittels einer Längsrille in dem Bauteil realisiert ist;
- Fig.3: eine isometrische Darstellung eines Gleitelements in einer alternativen Ausführungsform;
- Fig.4A: eine Schnittdarstellung, bei der zwischen dem Gleitelement und dem Bauteil in einem Überlappungsbereich ein Kanal mittels einer Querrille in dem Gleitelement realisiert ist;
- Fig.4B: eine Schnittdarstellung, bei der zwischen dem Gleitelement und dem Bauteil in einem Überlappungsbereich ein Kanal mittels einer Längsrille in dem Gleitelement realisiert ist.

Nachfolgend wird beispielsweise als Bauteil auf ein Kunststoffteil abgestellt. Es wird aber ausdrücklich darauf hingewiesen, dass andere Werkstoffe statt des Kunststoffs oder in Kombination mit dem Kunststoff einsetzbar sind.

Beispielhaft sind die folgenden Werkstoffe - auch in unterschiedlichen Kombination miteinander - gemäß dem hier vorgestellten Ansatz einsetzbar:
- ein Kunststoff, insbesondere ein faserverstärkter Kunststoff und/oder ein kohlefaserverstärkter Kunststoff;
- ein Leichtmetall, insbesondere auf der Basis von Aluminium und/oder Magnesium und/oder Titan und/oder deren Legierungen.

Hierin wird vorgeschlagen, das Bauteil (z.B. ein Karosserieteil) und/oder ein Gleitelement derart auszugestalten, dass insbesondere Flüssigkeiten (z.B. (Beschichtungsmedien, KTL, Füller, Basislack, Decklack) ablaufen können und somit eine Behinderung, z.B. ein Haften oder Verkleben, der Bewegung des Gleitelements wirksam verhindert wird.

Dies kann beispielsweise erreicht werden dadurch, dass das Bauteil und/oder das Gleitelement mindestens eine Längsrille und/oder mindestens eine Querrille aufweist/aufweisen. Allgemein ist somit zwischen dem Bauteil und dem Gleitelement mindestens ein Kanal vorgesehen, der zum Ablauf der Flüssigkeiten geeignet ist.

Ergänzend ist mindestens eine Oberfläche des Bauteils und/oder des Gleitelements entsprechend behandelt ( beschichtet), um reduzierte Benetzbarkeit und somit einen verbesserten Ablauf der Flüssigkeiten zu erreichen.

Auch kann im Rahmen der prozesstechnischen Bearbeitung beispielsweise der Karosserie dazu beigetragen werden, dass die Flüssigkeiten über den mindestens einen Kanal ablaufen können. Dies kann z.B. erreicht werden, indem das Karosserieteil mit Gleitelement nach einer Tauchlackierung entsprechend (z.B. für eine vorgebbare Zeitdauer) schräg gehalten oder positioniert wird, so dass (schwerkraftgetrieben) die Flüssigkeit über den mindestens einen Kanal ablaufen kann.

Der hier vorgeschlagene Ansatz hat unter anderem den Vorteil, dass die Qualität erhöht und der Ausschuss deutlich verringert werden kann. Auch wird wirksam die aufwändige und teure Bearbeitung reduziert, dergemäß ein Fahrzeug aus dem Fertigungsprozess aufgrund einer plastischen Verformung eines Karosserieteils ausgeschleust, das Karosserieteil demontiert, ein neues Karosserieteil montiert und das Fahrzeug erneut in den Lackdurchlauf wiedereingeschleust werden muss.

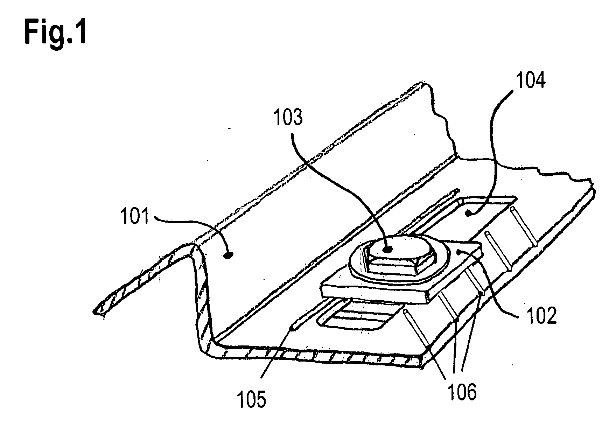

**Fig.1** zeigt ein Bauteil 101 (z.B. ein Karosserieteil eines Fahrzeugs) mit einer Längsnut 104 (Gleitelementdurchbruch), wobei in die Längsnut 104 ein Gleitelement 102 gleitend eingreift. Das Gleitelement 102 ist mit einer Schraube 103 an einem Träger (nicht dargestellt) befestigt. Dehnt sich z.B. bei einer Erwärmung das Bauteil 101 zu dem Träger unterschiedlich stark aus, so kann die Differenz der Ausdehnung über das Gleitelement 102 kompensiert werden, indem es sich entlang der Längsnut 104 bewegt.

Beispielsweise wird im Rahmen einer Tauchlackierung das Bauteil 101 mitsamt dem fixierten Gleitelement 102 durch eine Flüssigkeit bewegt. In einer anschließenden Trocknung soll verhindert werden, dass diese Flüssigkeit das Gleitelement 102 mit dem Bauteil verklebt und somit die Bewegung des Gleitelements 102 entlang der Längsnut 104 behindert.

Dies kann erreicht werden, indem mindestens ein Kanal vorgesehen ist, über den die Flüssigkeit ablaufen kann. Beispielhaft zeigt Fig.1 eine Längsrille 105, die im Wesentlichen parallel zu der Längsnut 104 ausgeführt ist und einen Überlappungsbereich mit dem Gleitelement 102 aufweist. Die Längsrille 105 kann in Form einer Aussparung in dem Bauteil 101 vorgesehen sein. Weiterhin sind mehrere Schrägrillen 106 dargestellt, die schräg zu der Längsnut 104 verlaufen und zumindest teilweise einen Überlappungsbereich mit dem Gleitelement 102 aufweisen. Die Schrägrillen 106 sind vorzugsweise als Aussparungen oder Vertiefungen in dem Bauteil 101 ausgeführt.

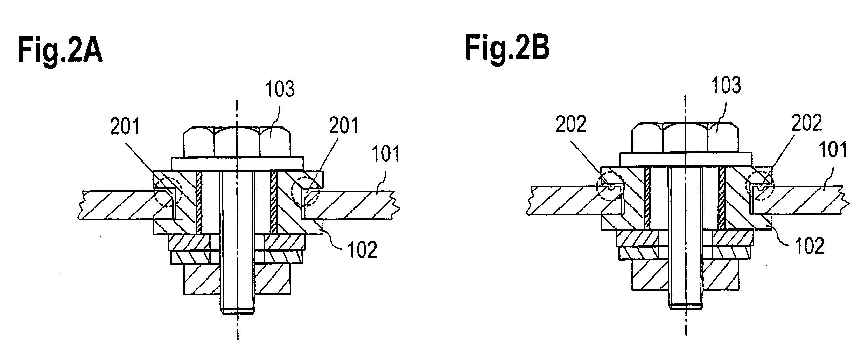

**Fig.2A** zeigt eine Schnittdarstellung durch die Schraube 103, wobei beispielhaft zwischen dem Gleitelement 102 und dem Bauteil 101 in einem Überlappungsbereich ein Kanal vorhanden ist dergestalt, dass das Bauteil 101 eine Phase 201 aufweist. Entsprechend kann die Flüssigkeit durch bzw. entlang der Phase 201 aus dem Überlappungsbereich zwischen Gleitelement 102 und Bauteil 101 abfließen. Diese Ausführung mit einer Phase 201 ist nicht Gegenstand der Erfindung.

**Fig.2B** zeigt eine Schnittdarstellung durch die Schraube 103, wobei im Unterschied zu Fig.2A anstatt der Phase 201 eine Längsrille 202 in dem Bauteil vorgesehen ist. Somit kann die Flüssigkeit durch diese Längsrille aus dem Überlappungsbereich zwischen dem Gleitelement 102 und dem Bauteil 101 abfließen.

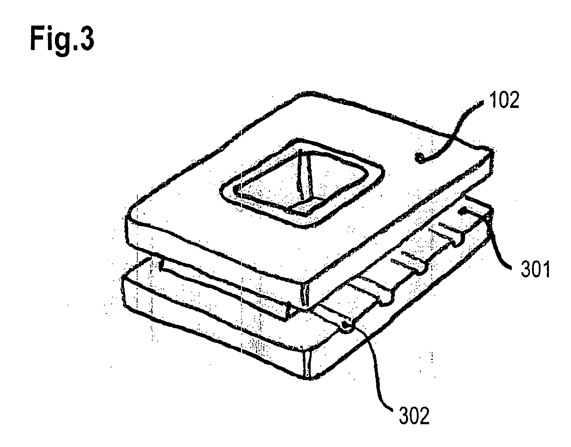

**Fig.3** zeigt beispielhaft das Gleitelement 102 in einer isometrischen Darstellung, wobei das Gleitelement 102 eine Gleitfläche 301 aufweist, in die mehrere Querrillen 302 eingelassen sind. Diese Querrillen 302 eignen sich als Kanäle zum Abfluss von Flüssigkeiten aus dem Überlappungsbereich zwischen dem Bauteil 101 und dem Gleitelement 102.

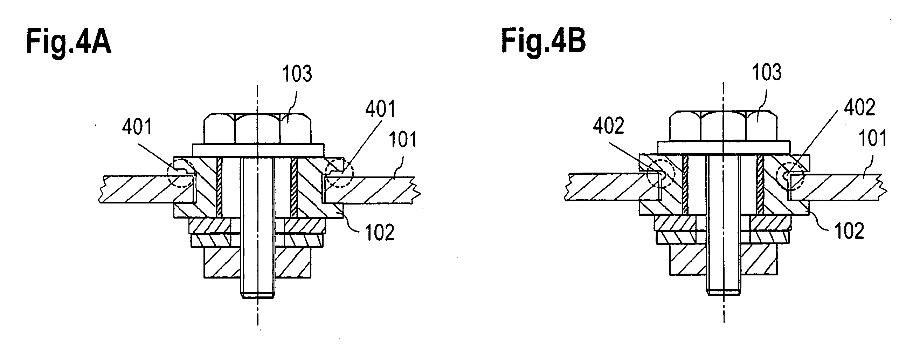

**Fig.4A** zeigt eine Schnittdarstellung durch die Schraube 103, wobei eine Querrille 401 des Gleitelements 102 vorgesehen ist, so dass die Flüssigkeit aus Überlappungsbereich zwischen dem Bauteil 101 und dem Gleitelement 102 abfließen kann.

**Fig.4B** ist eine ähnliche Schnittzeichnung durch die Schraube 103 dargestellt, wobei das Gleitelement 102 eine Längsrille aufweist, so dass die Flüssigkeit aus Überlappungsbereich zwischen dem Bauteil 101 und dem Gleitelement 102 durch diese Längsrille 402 abfließen kann.

### Bezugszeichenliste:

- 101: Bauteil (z.B. Karosserieteil)
- 102: Gleitelement
- 103: Schraube
- 104: Längsnut (z.B. Gleitelementdurchbruch)
- 105: Längsrille
- 106: Schrägrille

- 201: Fase an dem Bauteil 101
- 202: Längsrille in dem Bauteil 101

- 301: Gleitfläche
- 302: Querrille

- 401: Querrille in dem Gleitelement 102
- 402: Längsrille in dem Gleitelement 102

## Patentansprüche

1. Anordnung eines Bauteils an einem Träger, wobei das Bauteil (101) eine Längsnut (104) aufweist, in die ein Gleitelement (102) gleitend eingreift, das an dem Träger befestigt ist, **dadurch gekennzeichnet, dass** zumindest teilweise in einem Überlappungsbereich zwischen dem Bauteil (101) und dem Gleitelement (102) mindestens ein Kanal (105, 106) zum Ablauf von Flüssigkeiten vorgesehen ist, wobei der Kanal als eine Rille, insbesondere als eine Längsrille (202, 401) oder als eine Querrille (402) zumindest teilweise entlang oder zu der Längsnut (104), ausgeführt ist, wobei eine Oberfläche des Bauteils und/oder des Gleitelements zumindest teilweise beschichtet ist.

2. Anordnung nach Anspruch 1, bei dem der mindestens eine Kanal in dem Bauteil und/oder in dem Gleitelement vorgesehen ist.

3. Anordnung nach einem der vorhergehenden Ansprüche, bei dem der mindestens eine Kanal schräg oder im wesentlichen orthogonal zu der Richtung der Längsnut ausgeführt ist.

4. Anordnung nach einem der vorhergehenden Ansprüche, bei dem das Bauteil mindestens einen der folgenden Werkstoffe aufweist:
- einen Kunststoff, insbesondere einen faserverstärkten Kunststoff, insbesondere einen kohlefaserverstärkten Kunststoff;
- ein Leichtmetall, insbesondere auf der Basis Aluminium, Magnesium, Titan und/oder deren Legierungen;
- Stahl.

5. Anordnung nach einem der vorhergehenden Ansprüche, bei dem das Gleitelement aus Metall ist.

6. Anordnung nach einem der vorhergehenden Ansprüche, bei dem das Bauteil ein Karosserieteil oder ein Interieurteil eines Fahrzeugs ist.

7. Anordnung nach einem der vorhergehenden Ansprüche, bei dem das Bauteil eines der folgenden Teile umfasst:
- einen Kotflügel,
- einen Stoßfänger,
- ein Schweller,
- eine Heckklappe oder mindestens ein Teil der Heckklappe,
- eine Türe oder mindestens ein Teil der Türe,
- eine Frontklappe oder mindestens ein Teil der Frontklappe,
- einen Spoiler,
- ein Dach,
- ein Interieur-Teil.

## Claims

1. An arrangement of a component on a bearer, wherein the component (101) has a longitudinal groove (104) for sliding engagement of a sliding element (102) fastened to the bearer, **characterised in that** a duct (105, 106) for discharging liquid, at least at places, in an overlapping region between the component (101) and the sliding element (102), wherein the duct is in the form of a groove, especially a longitudinal groove (202, 401) or a transverse groove (402) at least at places along or near the longitudinal groove (104), wherein a surface of the component and/or of the sliding element is at least partly coated.

2. An arrangement according to claim 1, wherein the at least one duct is formed in the component and/or in the sliding element.

3. An arrangement according to any of the preceding claims, wherein the at least one duct is formed at an angle or substantially at right angles to the direction of the longitudinal groove.

4. An arrangement according to any of the preceding claims, wherein the component contains at least one of the following materials:
- a plastics material, especially a fibre-reinforced plastics material, especially a carbon fibre-reinforced plastics material;
- a light metal, especially based on aluminium, magnesium, titanium and/or alloys thereof, or
- steel.

5. An arrangement according to any of the preceding claims, wherein the sliding element is of metal.

6. An arrangement according to any of the preceding claims, wherein the component is a body part or an inner part of a vehicle.

7. An arrangement according to any of the preceding claims, wherein the component comprises one of the following parts:
- a mudguard,
- a bumper,
- a sill board,
- a tailgate or at least a part of the tailgate,
- a door or at least a part of the door,
- a bonnet or at least a part of a bonnet,
- a spoiler,
- a roof, and
- an inner part.

## Revendications

1. Agencement d'un élément sur un support, cet élément (101) comportant une rainure longitudinale (104) dans laquelle vient en prise en glissant un élément coulissant (102) qui est fixé au support,
**caractérisé en ce qu'**
il est prévu, au moins partiellement dans une zone de chevauchement entre l'élément (101) et l'élément coulissant (102) au moins un canal (105, 106) permettant l'écoulement de liquides, ce canal étant réalisé sous la forme d'une gorge en particulier d'une gorge longitudinale (202, 401) ou d'une gorge transversale (402), au moins partiellement le long ou vers la rainure longitudinale (104), une surface de l'élément ou de l'élément coulissant étant au moins partiellement recouverte.

2. Agencement conforme à la revendication 1, dans lequel le canal est prévu dans l'élément et/ou dans l'élément coulissant.

3. Agencement conforme à l'une des revendications précédentes, dans lequel le canal est réalisé obliquement ou essentiellement orthogonalement par rapport à la direction de la rainure longitudinale.

4. Agencement conforme à l'une des revendications précédentes, dans lequel l'élément renferme au moins l'un des matériaux suivants :
- un matériau synthétique, en particulier un matériau synthétique renforcé par des fibres, en particulier un matériau synthétique renforcé par des fibres de carbone,
- un métal léger en particulier à base d'aluminium, de magnésium, de titane et/ou de leurs alliages,
- de l'acier.

5. Agencement conforme à l'une des revendications précédentes, dans lequel l'élément coulissant est réalisé en métal.

6. Agencement conforme à l'une des revendications précédentes, dans lequel l'élément est une partie de carrosserie ou une partie intérieure d'un véhicule.

7. Agencement conforme à l'une des revendications précédentes, dans lequel l'élément constitue l'une des parties suivantes :
- une aile de véhicule,
- un pare-choc
- un marchepied,
- un hayon ou au moins une partie d'un hayon,
- une porte ou au moins une partie d'une porte,
- un capot avant ou au moins une partie d'un capot avant,
- un déporteur spoiler,
- un toit,
- une partie interne.
